**Europäisches Patentamt**

**European Patent Office**

**Office européen des brevets**

(11) Publication number : **0 401 270 B1**

# EUROPEAN PATENT SPECIFICATION

(45) Date of publication of patent specification :
**24.06.92 Bulletin 92/26**

(51) Int. Cl.⁵ : **A23N 15/08**

(21) Application number : **89902937.5**

(22) Date of filing : **15.02.89**

(86) International application number :
**PCT/DK89/00030**

(87) International publication number :
**WO 89/07400 24.08.89 Gazette 89/20**

(54) **A METHOD AND AN APPARATUS FOR CUTTING TOP AND ROOT ENDS OF ONIONS.**

(30) Priority : **16.02.88 DK 786/88**

(43) Date of publication of application :
**12.12.90 Bulletin 90/50**

(45) Publication of the grant of the patent :
**24.06.92 Bulletin 92/26**

(84) Designated Contracting States :
**AT BE CH DE FR GB IT LI LU NL SE**

(56) References cited :
**EP-A- 174 697**
**DE-A- 3 605 639**
**US-A- 2 300 773**
**US-A- 3 847 070**

(73) Proprietor : **TAFFEL FOODS A/S (DANISCO A/S)**
**Postbox 17 Langebrogade 1**
**DK-1001 Copenhagen K (DK)**

(72) Inventor : **GROENBECH, Hans, Christian**
**Hovedgaden 13**
**DK-4652 HAARLEV (DK)**

(74) Representative : **Lichtenberg, Erik et al**
**c/o Hofman-Bang & Boutard A/S Adelgade 15**
**DK-1304 Copenhagen K (DK)**

Jouve, 18, rue Saint-Denis, 75001 PARIS

## Description

The invention concerns a method of cutting top and root ends of onions, wherein the onion is oriented and then retained in said orientation, while cutting of the top and root ends of the onion takes place.

The best quality of processed onion products is obtained when the top and root ends are removed from the raw material. For this to be obtained, frequent manual labour is required to orient the onions before cutting can be performed on knife peeling machines having automatically self-adjusting and rotating knives.

The USA patent Specification 4,258,618 discloses an onion trimmer, in which the onions are conveyed by a spoon elevator and a carrying belt conveyor through a channel to an orientation device, which consists of a belt conveyor running oppositely to the onions and having a pitch in the direction of movement of the onions. The onions are thus conveyed by means of V-shaped flights in which the onions are oriented by rolling, which is caused by the belt conveyor moving in an opposite direction to the onions, as mentioned. After orientation, the onions are gripped one at a time by a transport wheel having a stationary and a movable jaw for each onion, which is retained and conveyed to self-adjusting cylindrical knives where the top and root portions are cut.

The EP Patent Specification 0 174 697 discloses an apparatus of the present type in which the onions are oriented resting on three points, viz. on the surface of a smooth cylinder and on two helical rods. The last-mentioned helical rods are disposed in an imaginary cylindrical surface. with such a mutual distance that they form a likewise imaginary helical groove having a width and distance from the smooth cyliner which is smaller than the diameter and axial length of the onions. Thus, the onions rest on said three points and naturally fall into position in the groove supported against the smooth cylinder. When the cylinder and the helical rods rotate in the same or opposite directions, the onions are moved with translatory motion toward retaining and cutting means and maintain their orientation during this translatory motion, because the shape of the onions fits the dimension of said groove and the distance to the smooth and solid roller.

DE-OS 3 605 639 discloses another apparatus of the present type in which the onion is placed in the gap existing between four rounded conical rollers mounted in pairs on parallel shafts. The onion is thus supported on four points and is thus not freely movable on the substrate because the onion is guided in the lateral direction as well as at right angles thereto. When the rollers are caused to rotate, the onion is likewise oriented because its shape fits the dimension of said gap. Thus rotating, the onion is moved with translatory motion to a cutting means, where cutting is performed in the outer shell, which is then blown off. The onion thus rotates during said treatment.

The object of the invention is to provide a method of the type stated in the opening paragraph where the top and root ends of the onion are cut in a simpler manner, without the onions having to be rotated a long distance in a relatively complicated apparatus, and without the onions being hampered during the orientation by the friction between carriers and the surface of the onions. It is moreover essential that good and safe orientation of the onions is obtained, even though the onions often have. rather different dimensions with respect to the mentioned grooves or gaps.

This object is achieved according to the invention in that the method stated in the opening paragraph is characterized by the subject-matter defined in the characterizing portion of claim 1.

In the present invention the onion is supported so that it can move freely on top of the rollers. The onion can therefore tumble about freely until it assumes the correct orientation because of the rotation where the axis of the onion is parallel with the axes of the rollers. This orientation is stable just like in a gyroscope.

The invention moreover concerns the apparatus in the introductory portion of claim 2 for performing the method, said apparatus being characterizing by the subject-matter defined in the characterizing portion of claim 2.

The invention will be explained more fully below with reference to the drawing, in which:

fig. 1 is a side view of an apparatus according to the invention,

fig. 2 is a top view of the apparatus of fig. 1,

fig. 3 is a schematic and enlarged view of the parts of the apparatus which axis-orient an onion and then retain the onion,

fig. 4 is a schematic section along the line A-A in fig. 3,

fig. 5 is a schematic and partially sectional view of the same parts as in fig. 3 and also shows knives for cutting the top and root ends of the onion, and

fig. 6 is an enlarged view of the rotatable cylindrical. rollers and their suspension and drive mechanism.

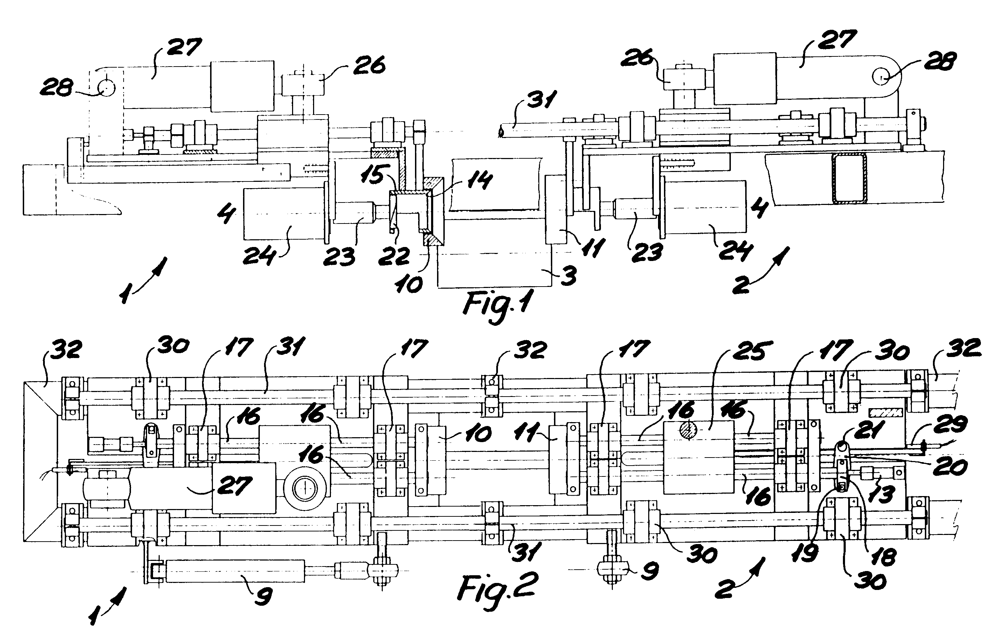

As shown in fig. 1 and fig. 2, the apparatus of the invention consists of two substantially identical, but oppositely directed parts 1 and 2, between which an onion is automatically secured in an axis-oriented position, i.e. a position in which the central axis of the onion extending through the top and root ends preferably coincides with the horizontal axis 4-4 in fig.1.

An onion whose top and root ends are to be cut is supplied from a supply mechanism (now shown), from which one onion at a time falls down on a pair of rotatable, cylindrical rollers 3, which have parallel horizontal axes and a smaller mutual gap than the diameter of the smallest onion. As shown in fig. 1, the axes 4 of the rollers 3 are disposed between the two parts 1 and 2 of the apparatus in such a vertical distance below the apparatus that the onion resting on the rollers 3 preferably protrudes just as much above as below the axis 4-4. When the onion rests on the rollers 3 just above the gap between these the central axis of the onion extending through the top and root ends assumes a quite arbitrary orientation with respect to the axis 4-4.

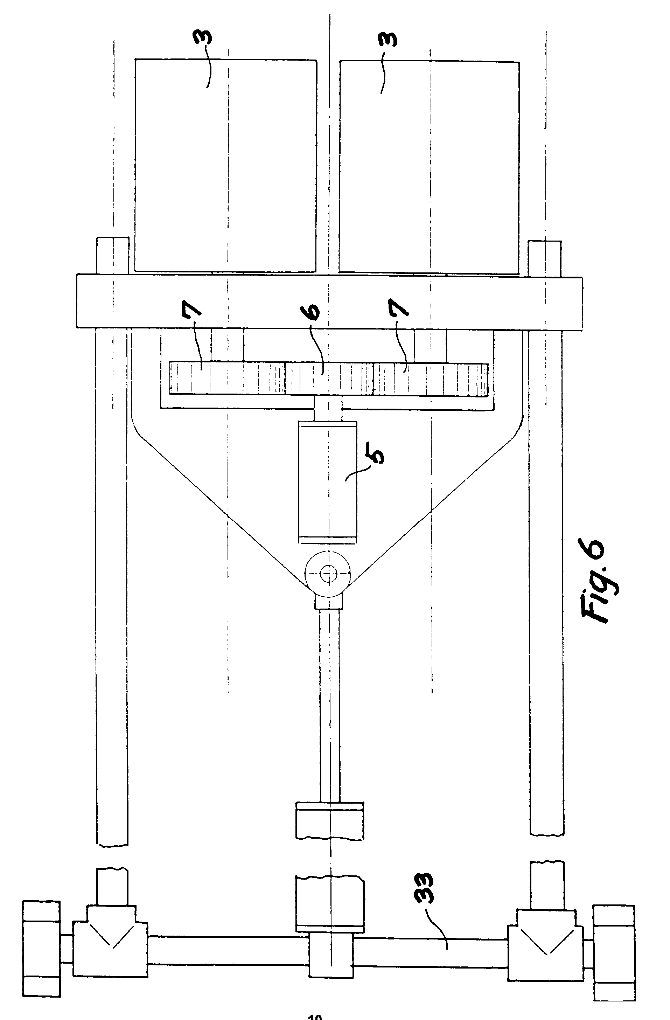

However, the rollers 3 are caused to rotate with the same direction of rotation around their horizontal axes by means of a motor 5 with a gear wheel 6 which drives each of the rollers 2 through a gear wheel 7 attached to each roller 2, as shown in fig. 6.

The rollers 3 consist of a suitable resilient material so that the onion does not jump during rotation, but is given a pure rotary motion, the surface on the rollers 3 having moreover a suitable frictional coating.

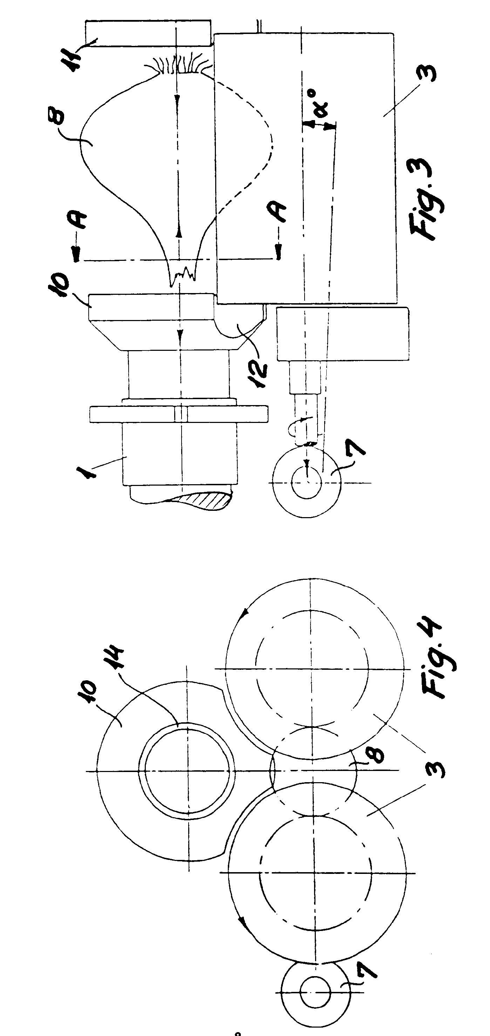

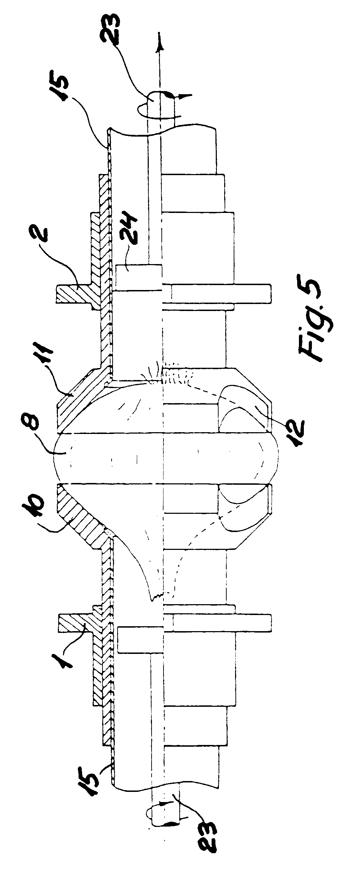

During rotation of the rollers 3 the onion 8, which is show in fig. 3 and fig. 5, is caused to rotate, as mentioned. During this, the central axis of the onion will be oriented owing to the rotation such as to coincide with the axis 4 of the apparatus.

When the axis-oriented position of the onion has been obtained, the rollers 3 are lowered, with the overall roller assembly 3, 5, 6, 7 rotating through an angle $\alpha°$ about a horizontal shaft 8 which is perpendicular to the axis 4-4. Simultaneously with this or immediately prior to this, the parts 1 and 2 of the apparatus are moved towards each other by means of pneumatic cylinders 9, whereby the onion 8 is gripped between two catch cones 10 and 11 which are co-axial with the axis 4-4.

The cylinders 9 are pneumatic and not hydraulic because the onion should not be subjected to a possibly crushing pressure between the catch cones 10 and 11. As shown in figs. 4 and 5, the catch cones 10 and 11 have downwardly cylindrical cuts 12 so that they can be moved horizontally past the rollers 3, which are generally lowered only after the onion 8 has been gripped by the catch cones 10 and 11.

The region between the cylindrical cuts 12 of the catch cones 10, 11 serves as a kind of bucket which, in particular in case of relatively small onions, lifts the onion 8 upwardly so that its axis extending through the top and root ends coincides with the axis 4-4 of the apparatus. Of course, this lifting movement is superfluous with larger onions.

If, in spite of the rotation of the onion 8, the orientation of the central axis of the onion is not within the intended tolerance threshold required for further processing, which may take place because of an unfortunate shape of some onions, the catch cones 10 and 11 will greatly remedy this because, as shown in fig. 5, they additionally align the onion 8 when it is gripped.

The situation of the onion 8 is now that, as shown in fig. 5, it is gripped and retained in an axis-oriented position between the catch cones 10 and 11.

The pressure from the pneumatic cylinders 9 causes the two parts 1 and 2 of the apparatus to be pressed additionally slightly together, the catch cones 10, 11 being moved slightly apart by the onion 8 against the force of a compression spring 13 until the end 14 of a holding pipe 15, which faces the onion, engages the onion, said holding pipe 15 being secured to the part in question and slidable inside the catch cone.

It should be noted already here that this movement of one or both catch cones with respect to the holding pipe 15, which is secured in the perspective one of the two parts 1 or 2 of the apparatus, does not necessarily take place with all onions. Particularly in case of relatively small onions, the onion will he gripped so deeply inside the bottom of the catch cones 10, 11 that it is actually the end 14 of the holding pipe 15 which first touches the onion 8, which cannot therefore move the actual catch cone 10 or 11.

The catch cones 10 and 11 are secured to control rods 16 which are slidable axially in bearings 17 on the apparatus part 1 or 2 in question. As shown in fig. 2, the compression spring 13 is so mounted on the part of the apparatus as to exert pressure against the end of a control rod 16. When a catch cone, e.g. the catch cone 11, is moved against the compression force from the spring 13 with respect to the holding pipe 15 because of the size and/or shape of the onion and is thus moved to the same extent with respect to the part 2 of the apparatus, a bracket 18 on the outer end of a control rod 16 moves one end 19 of a two-armed lever 20, which is rotatably journalled on the part 2 approximately at the centre. The other end of the lever 20 with a stop means 21 attached to it will thus be displaced with respect to the part 2 in a direction opposite to the movement of the catch cone 11 with respect to the part 2. The proportion between the size of the movement of the catch cone 11 and the stop means 21, respectively, in their respective directions in relation to the part 2 is determined by the lever ratio. The importance of the stop means 21 appears from the following decription of the cutting means.

Each part 1 and 2 mounts a cutting assembly which consists of a knife 22 secured to a rotatable rod 23, which can be driven by a drive motor 24. The entire cutting assmebly 22, 23, 24 is secured to a carriage 25 which is movable on the rods 16 of the part between the bearings 17.

The movement of the carriage 25 on the rods 16 is obtained by means of one end 26 of a cylinder 27, which is preferably a hydraulic cylinder. The other end 28 of the cylinder is secured to the respective part 1 or 2.

A stop means 29 for co-action with the mentioned stop means 21 is moreover secured to the cutting assembly 22, 23, 24 in a manner not shown.

When the cutting assembly is moved by the hydraulic cylinder 27 in a direction toward the onion 8, the knife 22 driven by the motor 24 is moved into the onion through the holding pipe 15, the knife 22 having just a slightly smaller diameter than the holding pipe 15. The cutting depth is determined by the engagement of the stop means 29 with the stop means 21, as this engagement signals the hydraulic cylinder to stop the movement of the cutting assembly toward the onion 8.

As mentioned before, the position of the stop means 21 i relation to the respective part of the apparatus was determined by the amount of the displacement of the catch cone 11 with respect to a holding pipe secured in the part. If for example the root end of the onion is very flat, or the root is downright recessed into the onion, the cone 11 will be displaced relatively much (toward te right in fig. 2) with respect to the part 2, and the stop means 21 will before be displaced relatively much (toward the left in fig. 2) with respect to the same part 2. Therefore, the cutting assembly 22, 23, 24 associated with the part 2 will be displaced relatively far to the left with respect to the part 2, before its stop means 21 hits the stop means 21 and stops the hydraulic cylinder 27, which in turn stops the displacement of the cutting assembly 22, 23, 24. An intended great cutting depth is hereby obtained with the mentioned onion type.

Conversely, if the root end of the onion is relatively round, the automatic adjustment of the cutting depth means that the cutting assembly is not displaced very far to the left with respect to the part 2 before its stop means 29 hits the stop means 21, and an intended small cutting depth is obtained for this onion type.

It has been found that the ratio of the two arms of the lever 20 should be approximately 1:1.3 so that the cutting assembly is displaced approximately 1.3 times more than the catch cone (and in an opposite direction) in relation to the respective part of the apparatus.

The movement of the two parts 1 and 2 of the apparatus towards and away from the onion 8 is controlled in that these two parts have bearings 30 which slide on rods 31 secured in the frame 32 of the apparatus.

It should be noted that the automatic adjustment of the cutting depth is obtained individually at the root end and top end of the onion, and that it is quite arbitrary which part 1 or 2 of the apparatus treats one or the other end of the onion 8.

It should moreover be noted that it will be possible to arrange the apparatus such that its one part 1 or 2 is stationary so that only the other, slidable part can move toward said stationary part when an onion is gripped and away from this stationary part when the onion is to be released after cutting of its top and roots ends.

## Claims

1. A method of cutting the top and root ends of onions (8), wherein the onion (8) is oriented and then retained in said orientation, while cutting of the top and root ends of the onion takes place, **characterized** in that the orientation of the onions (8) is performed in that pure rotary motion, without translatory motion, is imparted to each onion supported on a movable substrate, e.g. a pair of cylindrical rollers provided with smooth surfaces, without grooves or any other feature in which the onion can fit, said rollers rotating in the same direction so that the onion (8) rotates freely, until the central axis of the onion (8) extending through the top and root ends assumes a determined orientation because of the rotation.

2. An apparatus for cutting the top and root ends of onions (8) in performance of the method of claim 1, **characterized** in that the apparatus comprises in combination:

onion rotating means consisting of a pair of cylindrical rollers (3), which are journalled in a frame (32) and are rotatable with the same axis of rotation, and which have parallel horizontal shafts with a mutual gap smaller than the diameter of the smallest onion (8),

gripper means (10, 11) adapted to grip and retain the onion (8) when it has obtained the determined axis-oriented position during the rotation, said gripper means consisting of a pair of co-axial catch cones (10, 11) which are directed oppositely to each other and are axially movable from their respective sides of the rotating onion (8) to engage the onion (8) and retain it,

holding means consisting of a holding pipe (15) provided in the bottom of each catch cone (10, 11), which is slidable thereon in an axial direction, said holding pipes (15) having a diameter which is one third to two thirds of the onion diameter,

cutting means (22) adapted to remove the top and root ends of the onion (8) in the retained position and consisting of a pair of knife bodies, which are secured in the end of a pair of rotatable rods (23) which faces the onion, said rods extending co-axially inside their respective holding pipes (15) and being axially movable toward the onion (8) from their respective sides until cutting a depth in the onion, which is determined by the engagement between an end stop (21) in the apparatus and an end stop (29) on the rotatable rod (23) in question.

3. An apparatus according to claim 2, **characterized** in that the cylindrical surfaces of the rollers (3) consist of a material having a relatively high coefficient of friction in relation to onions and impact absorbing properties.

4. An apparatus according to claim 2 or 3, **characterized** in that the shafts of the rollers (3) are one-sidedly journalled in a common bearing means which is tiltable so that the shafts may be tilted by tilting means from their horizontal position to an inclined position in which their free ends are lowered with respect to the bearing means.

5. An apparatus according to claim 2, **characterized** in that said cutting depth is automatically adjustable as a function of the shape and/or size of the onion.

6. An apparatus according to claims 2 and 5, **characterized** in that the end stop (21) in the apparatus is secured to one end of a two-armed lever (20) which is journalled on the holding pipe (15) or a part connected with it, the other end (19) of said lever (20) being articulated to the catch cone (10 or 11) axially slidable with respect to the holding pipe.

**Patentansprüche**

1. Verfahren zum Abschneiden der Spitzen und der Wurzelenden von Zwiebeln (8), bei dem die Zwiebel (8) ausgerichtet und dann in dieser Ausrichtung fixiert wird, während das Abschneiden der Spitze und des Wurzelendes stattfindet, dadurch gekennzeichnet, daß die Ausrichtung der Zwiebel (8) ausgeführt wird, indem jede Zwiebel, die auf einer bewegbaren Unterlage, beispielsweise einem Paar zylindrischer Walzen mit glatter Oberfläche, ohne Kerben oder andere Merkmale, in die eine Zwiebel hineinpaßt, liegt, in eine reine Drehbewegung, ohne eine translatorische Bewegung, versetzt wird, wobei die Walzen gleichsinnig rotieren, so daß die Zwiebel (8) frei rotiert, bis die Zentralachse der Zwiebel (8), die sich durch Spitze und Wurzelende erstreckt, durch die Drehung eine vorbestimmt Ausrichtung annimmt.

2. Vorrichtung zum Abschneiden der Spitzen und der Wurzelenden der Zwiebeln (8) in Ausführung des Verfahrens nach Anspruch 1, dadurch gekennzeichnet, daß die Vorrichtung in Kombination aufweist:

Mittel zum Drehen der Zwiebel mit einem Paar zylindrischer Walzen (3), die in einem Rahmen (32) drehbar gelagert sind, und mit gleicher Rotationsachse drehbarsind, und die parallele, horizontale Wellen haben, mit einem gegenseitiger Abstand kleiner als der Durchmesser der kleinsten Zwiebel (8) ist,

Greifmittel (10, 11), die zum Erfassen und Fixieren der Zwiebel (8) ausgebildet sind, wenn diese die vorbestimmte, achsenausgerichtete Stellung während der Drehung erreicht hat, wobei diese Greifmittel aus einem Paar co-axialer Auffangkonusse (10, 11) bestehen, die entgegengesetzt zueinander gerichtet sind, und die von den jeweiligen Seiten der rotierenden Zwiebel (8) axial bewegbar sind, um die Zwiebel (8) zu erfassen und zu fixieren,

Haltemittel, mit einem Halterohr (15), das am Grund eines jeden Auffangkonus (10, 11) vorgesehen ist, der darauf in axialer Richtung verschiebbar ist, wobei die Halterohre (15) einen Durchmesser aufweisen, der ein Drittel bis zwei Drittel des Zwiebeldurchmessers beträgt, und.

Schneidmittel (22), die zum Entfernen der Spitze und des Wurzelendes der Zwiebel (8) in der fixierten Stellung ausgelegt sind, mit einem Paar Messerkörper, die an den Enden eines Paares drehbarer Stangen (23), das der Zwiebel zugewandt ist, befestigt sind, wobei sich die Stangen co-axial im Inneren ihres jeweiligen Halterohrs (15) erstrecken, und von ihrer jeweiligen Seite aus axial auf die Zwiebel zu bis zu einer Schnittiefe bewegt werden können, die durch die Berührung zwischen einem Anschlag (21) an der Vorrichtung und einem Anschlag (29) ander jeweiligen drehbaren Stange (23) bestimmt ist.

3. Vorrichtung nach Anspruch 2, dadurch gekennzeichnet, daß die zylindrischen Oberflächen der Walzen (3) aus einem Material mit einem relativ hohen Reibungskoeffizienten in Bezug auf Zwiebeln und stoßdämpfenden Eigenschaften bestehen.

4. Vorrichtung nach Anspruch 2 oder 3, dadurch gekennzeichnet, daß die Wellen der Walzen (3) einseitig in einem gemeinsamen Lagergehäuse gelagert sind, das kippbar ist, so daß die Wellen durch Kippmittel aus ihrer horizontalen Lage in eine geneigte Stellung gekippt werden können, in der ihre freien Enden bezogen auf das Lagergehäuse abgesenkt sind.

5. Vorrichtung nach Anspruch 2, dadurch gekennzeichnet, daß die Schnittiefe automatisch einstellbar ist als eine Funktion der Form und/oder Größe der Zwiebel.

6. Vorrichtung nach den Ansprüchen 2 und 5, gekennzeichnet dadurch, daß der Anschlag (21) in der Vorrichtung an einem Ende eines zweiarmigen Hebels (20) befestigt ist, der auf dem Halterohr (15) oder einem mit diesem verbundenem Teil des Halterohrs gelagert ist, wobei das andere Ende (19) des Hebels (20) an dem Auffangkonus (10 oder 11) axial gleitend bezogen auf das Halterohr angelenkt ist.

**Revendications**

1. Procédé pour couper les extrémités supérieures et de racine d'oignons (8) selon lequel l'oignon (8) est orienté et ensuite maintenu dans ladite orientation pendant que s'effectue la coupe des extrémités supérieure et de racine de l'oignon, caractérisé en ce que l'orientation des oignons (8) est obtenue en communiquant un mouvement rotatif pur, sans mouvement de translation, à chaque oignon supporté sur un substrat mobile, par exemple une paire de rouleaux cylindriques munis de surfaces lisses, sans rainures ou toute autre caractéristique dans laquelle l'oignon peut s'adapter, lesdits rouleaux tournant dans la même direction afin que l'oignon (8) tourne librement jusqu'à ce que l'axe de symétrie de l'oignon (8) passant par les extrémités supérieure et de racine prenne une orientation déterminée par suite de la rotation.

2. Appareil pour couper les extrémités supérieur et de racine d'oignon (8) mettant en oeuvre le procédé selon la revendication 1, caractérisé en ce qu'il comprend en combinaison :

des moyens de rotation de l'oignon constitués d'une paire de rouleaux cylindriques (3), qui tourillonnent dans un bâti (32) et qui tournent selon le même sens de rotation et qui comportent des arbres horizontaux et verticaux avec un intervalle mutuel inférieur au diamètre de l'oignon le plus petit (8),

des moyens de préhension (10, 11) conçus pour saisir et maintenir l'oignon (8) lorsqu'on a obtenu la position déterminée en ce qui concerne l'orientation de son axe pendant la rotation, lesdits moyens de préhension étant constitués d'une paire de cônes de blocage co-axiaux (10, 11) qui sont orientés de façon opposée l'un par rapport à l'autre et qui sont axialement mobiles à partir de leurs côtés respectifs de l'oignon en rotation (8) pour venir en prise avec l'oignon (8) et le maintenir,

des moyens de maintien constitué par un tuyau de maintien (15) prévu au fond de chaque cône de blocage (10, 11), qui peut coulisser par rapport à ce dernier dans une direction axiale, lesdits tuyaux de maintien (15) ayant un diamètre qui est égal à un tiers à deux tiers du diamètre de l'oignon,

des moyens de coupe (22) conçus de façon à enlever les extrémités supérieure et de racine de l'oignon (8) dans la position de maintien et comprenant une paire de corps de couteaux, qui sont fixés à l'extrémité d'une paire de tiges rotatives (23) qui fait face à l'oignon, lesdites tiges s'étendant co-axialement à l'intérieur de leurs tuyaux de maintien respectifs (15) et étant mobiles axialement vers l'oignon (8) à partir de leurs côtés respectifs jusqu'à découper une profondeur dans l'oignon qui est déterminée par la venue en prise d'une butée d'extrémité (21) dans l'appareil avec une butée d'extrémité (29) sur la tige rotative (23) en question.

3. Appareil selon la revendication 2, caractérisé en ce que les surfaces cylindriques des rouleaux (3) sont constituées d'un matériau présentant un coefficient de frottement relativement élevé par rapport aux oignons et des propriétés d'absorption d'impacts.

4. Appareil selon la revendication 2 ou 3, caractérisé en ce que les arbres des rouleaux (3) tourillonnent d'un côté sur un système de palier commun qui est inclinable de manière que les arbres puissent être basculés par des moyens d'inclinaison, de leur position horizontale à une position inclinée dans laquelle leurs extrémités libres sont abaissées par rapport au système de palier.

5. Appareil selon la revendication 2, caractérisé en ce que ladite profondeur de découpe est automatiquement réglable en fonction de la forme et/ou de la dimension de l'oignon.

6. Appareil selon les revendications 2 et 5, caractérisé en ce que la butée d'extrémité (21) dans l'appareil est fixée à une extrémité d'un levier à deux bras (2) qui est articulé sur le tuyau de maintien (15) ou une partie connectée à ce dernier, l'autre extrémité (19) dudit levier (20) étant articulée au cône de blocage (10 ou 11) axialement coulissable par rapport au tuyau de maintien.

Fig.1

Fig.2

Fig. 3

Fig. 4

Fig.5

Fig.6